Europäisches Patentamt

(19) European Patent Office

Office européen des brevets

(11) Publication number: **0 009 955**
**B1**

# EUROPEAN PATENT SPECIFICATION

(45) Date of publication of patent specification: **18.05.83**

(21) Application number: **79302061.1**

(22) Date of filing: **01.10.79**

(51) Int. Cl.³: **B 07 C 5/34,** G 06 K 19/06, B 65 D 23/00

(54) Container coding.

(30) Priority: **02.10.78 GB 3895678**
**10.07.79 GB 7923976**

(43) Date of publication of application:
**16.04.80 Bulletin 80/8**

(45) Publication of the grant of the patent:
**18.05.83 Bulletin 83/20**

(84) Designated Contracting States:
**BE DE FR IT**

(56) References cited:
FR - A - 2 234 613
FR - A - 2 354 975
US - A - 3 745 314

(73) Proprietor: **UNITED GLASS LIMITED**
**Kingston Road**
**Staines, Middlesex, TW18 1AD (GB)**

(72) Inventor: **Ashcroft, Richard Ian**
**24, Wells Close**
**Harpenden Hertfordshire (GB)**

(74) Representative: **Votier, Sidney David**
**CARPMAELS & RANSFORD 43, Bloomsbury**
**Square**
**London WC1A 2RA (GB)**

Courier Press, Leamington Spa, England

Container coding

This invention relates to the coding of containers, and especially to the coding of glass containers such as bottles and jars.

The manufacture of glass containers is a highly automated procedure. Molten glass is fed from a furnace to one or more moulding machines, in which the glass, in the form of individual gobs, is pressed and/or blown into shape in mould cavities. Several different types of glass making machine are known, and they operate on the multi-mould cavity principle. In other words, it is normal for a machine to comprise at least eight moulds, and many machines have twelve, sixteen or even twenty-four moulds which are simultaneously operating to produce moulded glass containers. Each individual mould will produce some thousands of containers per day, if the machine is operated continuously.

It sometimes happens that the glassware produced in glass-making machines is defective for one reason or another, and in some cases the defects are so bad that the ware cannot be supplied for the customers particular end use. It will normally be the case that the defective ware is produced in one, or perhaps two, moulds only, and it is therefore necessary that those moulds, and the ware produced by them, should be easily and readily identifiable so that the ware that is defective can be located and discarded.

It is also a requirement of packagers nowaday that, regardless of whether the glassware is defective, each article of glassware, e.g. each glass bottle or jar, should be readily identifiable as to its place of manufacture, the mould in which it was manufactured, and possibly even the date of manufacture.

For these reasons it has recently become necessary to provide glassware with distinguishing markings, or codes, by which their precise location of manufacture may be identified. The present invention is concerned with the provision of a coding system for glass bottles and other glass containers.

It is known to provide glass containers with codes which are machine-readable, thus enabling identification to be made automatically.

French Specification FR—A—2,354,975, for example, illustrates glass containers having binary-coded information in the form of dots or bars moulded onto the side thereof. The code may be considered in two parts: the first part providing the information in question, and the second part acting as a clock to enable the first part information to be read accurately. However, the placing of such marks on the sides of glass containers may not be aesthetically acceptable in some circumstances.

U.S. Patent Specification 3,745,314 similarly illustrates glass containers having information coded in the form of protuberances moulded thereon. The protuberances appear as disparate mouldings on the circumferences of two concentric circles on the base of the container.

In addition to the above, it is also known to provide around the base periphery of glass containers a regular series of protruding markings (often as short radial bars) which are known as stipple marks or stippling. Stippling is employed mainly to prevent much of the hot base of the moulded container from contacting the conveyor as it is taken from the mould through the annealing lehr. Such stippling provides a better-annealed moulded product.

We have now devised a technique whereby machine-readable codes may be moulded onto the base of glass containers and with the minimum of additional markings having to be provided. This has been accomplished by employing the stippling for use with the code.

According to the invention there is provided a glass container bearing a machine-readable code comprising markings (1, 3) arranged in tracks on the base of the container along the circumferences of coincident sectors of at least two concentric circles (3, 4), characterised in that the markings in one track (herein termed the first track) are formed by substantially equi-spaced stippling marks provided towards the edge of said base except in positions defined by the two radii respectively defining the boundary of said sectors whereat said stippling marks are absent.

The invention also provides glass-making moulds which are configured to provide the glassware manufactured in them with the markings described immediately above.

The coding system of the invention may be applied to glass containers of various shapes. Thus, it may be applied to bottles having round bases, in which case the concentric circles will have a finite radius, suitably only slightly smaller than the radius of the base (i.e. the markings are sited adjacent the periphery of the base); or it may be applied to bottles having bases which are other than round, e.g. rectangular, in which case the concentric circles may have an infinite radius and the two sets of markings will occupy positions on parallel straight lines, preferably along one or both edges of the base of the container. For containers whose bases are neither round nor rectangular it will be preferable to adopt a system of parallel straight line code markings.

The markings suitably comprise bars, which are preferably projections but may be indentations, moulded into the base of the container, the mid-points of which are on the circumferences of at least two concentric circles. The bars are suitably arranged along the radii of such circles, i.e. they will be parallel in the case of rectangular bases, although they may be arranged at an angle to such radii.

The markings, which will differ from mould to mould, will preferably be such as may be scanned by an optical scanner which converts the patterns generated by them into electrical pulses which are then electronically decoded. The use of bars as the code markings makes the containers of the invention eminently scannable by means of a camera containing a linear array of photo-detectors, e.g. photodiodes.

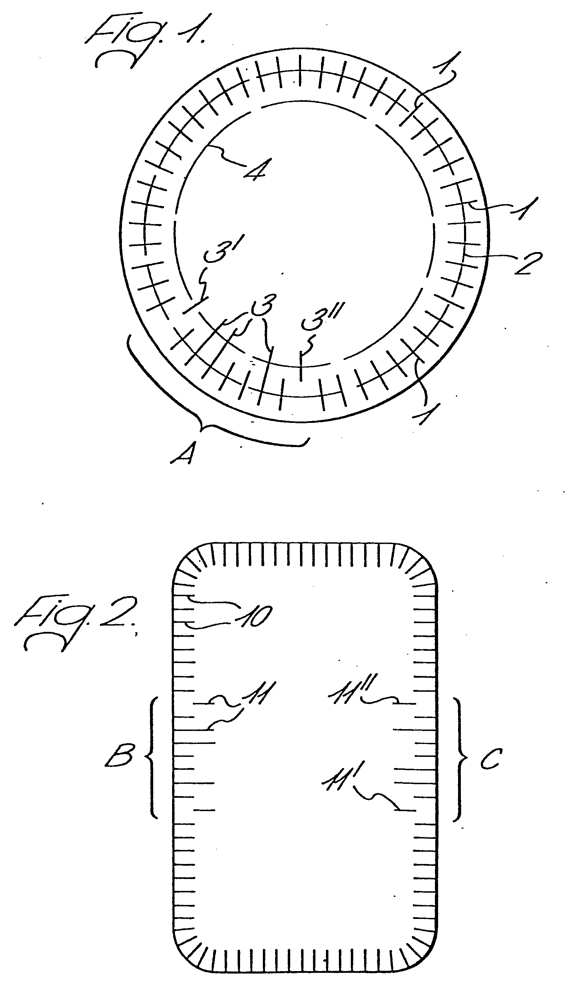

The accompanying diagrammatic drawings are views of the bottoms or punts of glass bottles bearing coding marks in accordance with the invention, Figure 1 showing the punt of a round bottle and Figure 2 that of a rectangular bottle.

Referring to Figure 1, the base of the bottle is provided with an outer set of equi-spaced radial bars 1, the mid-points of which lie on the circumference of a notional circle 2. The bars 1 may take the form of the usual stippling.

A further series of bars 3 is provided, the mid-points of each of which lie on the circumference of a notional circle 4. The circles 2 and 4 are concentric.

The coding is made up of the combination of bars 1 and bars 3, and in the illustration the particular code shown occupies the portion "A" of the base of the bottle. The code combination shown therefore consists of a bar 3 and no bar 1; no bar 3 and a bar 1; a bar 3 and a bar 1; a bar 3 and a bar 1; no bar 3 and a bar 1; no bar 3 and a bar 1; a bar 3 and a bar 1; no bar 3 and a bar 1; a bar 3" and no bar 1. Such a combination of bars would be unique and attributable to a single glass-making mould only. All the containers having this particular combination of code bars will thus have been made in that particular mould.

The code may be scanned by a linear diode array camera, suitably contained in a circuit which pays no attention to a sequence of successive bars 1 but which is triggered by the lack of a bar 1 and the presence of a bar 3 (i.e. that shown as 3'), after which it analyses the remainder of the binary code group "A" and compares the information obtained therefrom with information stored in a memory and, if required, indicates that a particular code has been identified. The presence of a further bar 3 (that shown as 3") and no bar 1 indicates the end of the code and confirms that the full code, in this case the seven bits of information between bar 3' and 3", has been received.

Figure 2 shows the base of a rectangular bottle, which is provided with an outer set of bars 10, which for the most part may take the form of the usual equi-spaced stippling, and an inner set of bars 11, the combination of inner and outer bars in each of the regions labelled "B" and "C" making up the coding in this example. In the example shown the coding in each of region "B" and "C" is identical, so that if a code scanning or camera viewing device is aligned with a long edge of the bottle it does not matter which way round the bottle is when it comes within the field of the viewing device.

The coding illustrated in Figure 2 is precisely the same as that shown in Figure 1, and consists of seven bits of information between the trigger bar 11' (a bar 11 and no bar 10) and the bar 11" (a bar 11 and no bar 10) which signifies the end of the code. Thus the code in this case, along both long edges of the container, consists, between bars 11' and 11", of no bar 11 and a bar 10; a bar 11 and a bar 10; a bar 11 and a bar 10; no bar 11 and a bar 10; no bar 11 and a bar 10; a bar 11 and a bar 10; no bar 11 and a bar 10. As before, this particular combination of bars 10 and 11 will relate uniquely to one particular forming mould, the identity of which is stored in a memory linked to the device which scans the code.

It will be appreciated that the coding system described in particular herein make use of two sets of code bars. The use of three or more sets is of course possible and will increase the number of available combinations and thus the possible number of code identities.

## Claims

1. A glass container bearing a machine-readable code comprising markings (1, 3) arranged in tracks on the base of the container along the circumferences of coincident sectors of at least two concentric circles (3, 4), characterised in that the markings of one track (herein termed the first track) are formed by substantially equispaced stippling marks provided towards the edge of said base except in positions defined by the two radii respectively defining the boundary of said sectors whereat said stippling marks are absent.

2. A container according to claim 1 characterised in that the code comprises markings arranged in two tracks.

3. A container according to claim 1 or 2 characterised in that the first track is the outermost track.

4. A container according to any of claims 1 to 3 characterised in that markings (3) in the second track are colinear with markings (1) in the first track except in said positions defined by said two radii.

5. A container according to claim 4 characterised in that said markings intersect the centre of said concentric circles.

6. A container according to any of claims 1 to 5 characterised in that a marking (3', 3") is always present in said second track colinear with said two radii defining the said boundary of said sectors.

7. A container according to any of claims 1 to 6 characterised in that said code appears twice on the base thereof.

8. A mould for manufacturing glass containers and configured so as to provide a coded container as claimed in any of claims 1 to 7.

## Revendications

1. Récipient en verre portant un code lisible par machine, comprenant des marques (1, 3) réparties suivant des pistes sur la base du récipient le long de circonférences de secteurs coïncidents d'au moins deux cercles concentriques (3, 4), caractérisé en ce que les marques d'une piste (appelée dans la suite la première piste) sont formées par des marques de pointillage essentiellement également espacées et prévues en direction du bord de ladite base, excepté dans des positions définies par les deux rayons définissant respectivement la lisière desdits secteurs où lesdites marques de pointillage sont absentes.

2. Récipient selon la revendication 1, caractérisé en ce que le code comprend des marques disposées sur deux pistes.

3. Récipient selon l'une des revendications 1 ou 2, caractérisé en ce que la première piste est la piste complètement extérieure.

4. Récipient selon l'une quelconque des revendications 1 à 3, caractérisé en ce que des marques (3) de la seconde piste sont colinéaires avec des marques (1) de la première piste, excepté dans lesdites positions définies par lesdits deux rayons.

5. Récipient selon la revendication 4, caractérisé en ce que lesdites marques coupent le centre desdits cercles concentriques.

6. Récipient selon l'une quelconque des revendications 1 à 5, caractérisé en ce qu'une marque (3', 3") est toujours présente dans ladite seconde piste colinéaire avec lesdits deux rayons définissant la lisière desdits secteurs.

7. Récipient selon l'une quelconque des revendications 1 à 6, caractérisé en ce que ledit code apparaît deux fois sur la base du récipient.

8. Moule de fabrication de récipients en verre et agencé de façon à former un récipient codé selon l'une quelconque des revendications 1 à 7.

## Patentansprüche

1. Glasbehälter mit maschinenlesbarem Code, der in Spuren auf dem Boden des Behälters längs der Umfänge von übereinstimmenden Sektoren von mindestens zwei konzentrischen Kreisen (3, 4) angeordnete Marken (1, 3) umfaßt, dadurch gekennzeichnet, daß die Marken in einer Spur (hier als erste Spur bezeichnet) als Tüpfelmarken ausgebildet sind, die im wesentlichen abstandsgleich nach der Kante des Bodens zu vorgesehen sind mit Ausnahme derjenigen Positionen, die durch die jeweils die Sektoren begrenzenden Radien bestimmt sind, an denen die Tüpfelmarken fehlen.

2. Behälter nach Anspruch 1, dadurch gekennzeichnet, daß der Code in zwei Spuren angeordnete Marken umfaßt.

3. Behälter nach Anspruch 1 oder 2, dadurch gekennzeichnet, daß die erste Spur die äußerste Spur ist.

4. Behälter nach einem der Ansprüche 1 bis 3, dadurch gekennzeichnet, daß die Marken (3) in der zweiten Spur mit Ausnahme derjenigen Positionen, die durch die beiden Radien bestimmt sind, fluchtend mit Marken (1) in der ersten Spur angeordnet sind.

5. Behältner nach Anspruch 4, dadurch gekennzeichnet, daß die Marken den Mittelpunkt der konzentrischen Kreise schneiden.

6. Behälter nach einem der Ansprüche 1 bis 5, dadurch gekennzeichnet, daß eine Marke (3', 3") in der zweiten Spur jeweils fluchtend mit den beiden die Sektoren begrenzenden Radien vorhanden ist.

7. Behälter nach einem der Ansprüche 1 bis 6, dadurch gekennzeichnet, daß der Code zweifach am Boden erscheint.

8. Form zur Herstellung von Glasbehältern, die zur Bildung eines codierten Containers nach einem der Ansprüche 1 bis 7 geformt ist.

*Fig. 1.*

*Fig. 2.*